# EUROPÄISCHE PATENTSCHRIFT

(11) **EP 2 332 407 B1**
(45) Veröffentlichungstag und Bekanntmachung des Hinweises auf die Patenterteilung: **04.12.2013**
(21) Anmeldenummer: 10013504.5
(22) Anmeldetag: 11.10.2010
(51) Int. Cl.: A01K 85/00, A01K 83/06

(54) **JIG-Kopfsystem zur sicheren Befestigung eines Köders**
JIG head system for securing a lure
Système de tête JIG pour la fixation sûre d'un appât

(30) Priorität: 09.12.2009 AT 19422009
(43) Veröffentlichungstag der Anmeldung: 15.06.2011
(73) Patentinhaber: Franz Rübig & Söhne GmbH & Co. KG, 4600 Wels (AT)
(72) Erfinder: Rübig, Günter, Dipl. Ing., 4600 Wels (AT); Grüneis, Wolfgang, Mag., 4040 Linz (AT)
(74) Vertreter: Landgraf, Elvira

(56) Entgegenhaltungen:
- US-A- 2 012 786
- US-A- 5 027 544
- US-A1- 2008 236 022

## Beschreibung

Die Erfindung betrifft ein JIG-Kopfsystem zur sicheren Befestigung eines Köders.

JIG- Kopfsysteme sind bekannt, beispielsweise aus DE 299 15 294 U, US 200810168700 A, WO 92/08346 A.

US 2008/0236022 A offenbart einen federnd ausgeführten Haltebügel, der am JIG-Kopf montiert ist.

DE 202 02 280 U offenbart eine Klammer, die zur Fixierung des Köders dient.

Diese Klammer ist aber umständlich zu handhaben, da sie über einen Haken geöffnet bzw. geschlossen werden muss.

WO 2006/058362 A offenbart einen aufsteckbaren Clip zur Fixierung des Köders, der nicht fest mit dem Jig Kopf verbunden ist.

Der JIG-Kopf besteht dabei aus einem Körper, meist einem gegossenen Metallkörper mit einem beispielsweise kugel-, keil- oder fischförmigen Kopf und einem Fixierungsstift mit Haltevorrichtungen für den Köder.

Der Kopf dient zur Beschwerung und Ausrichtung des Köders.

Die Haltevorrichtungen sind beispielsweise als Widerhaken, Ausbuchtungen oder Schraubvorrichtungen ausgeführt.

Aus US 5,027544 ist ein Anglerköder mit einem Jig-Kopfsystem bekannt, bei dem die Haltvorrichtung durch bewegliche Hebel realisiert ist.

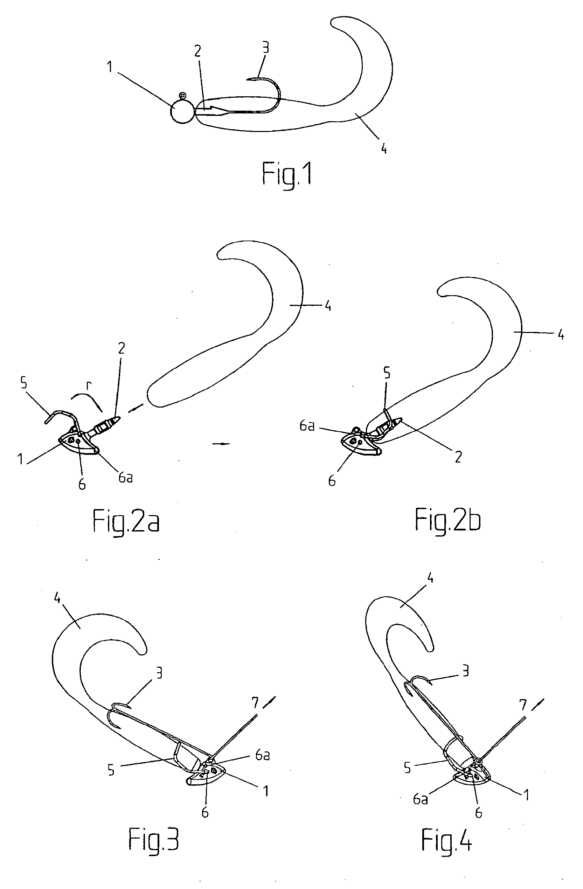

Eine beispielhafte Ausführung der bekannten JIG-Köpfe mit Fixierstift und Haken ist in Fig. 1 dargestellt.

An der Haltevorrichtung und dem Fixierungsstift wird ein Köder fixiert. So wird beispielsweise bei Verwendung eines Hakens als Haltevorrichtung der Köder möglichst mittig auf den Haken gefädelt und der Köder mittels des Fixierungsstiftes derart befestigt, dass der Köder mit dem Kopfteil des JIGs bündig abschließt und ein Teil des Hakens aus dem Köder herausragt.

Um den Verlust des meist aus Kunststoff bestehenden Köders zu vermeiden, wird dieser oft noch zusätzlich mit Klebstoff am Fixierungsstift befestigt.

Diese Art der Befestigung führt aber auch dazu, das der Köder nach einmaliger Verwendung kaum mehr verwendet werden kann, da er einerseits durch den Haken beschädigt werden kann, andererseits die Klebeverbindung nicht leicht lösbar ist.

Weiters ragen der Fixierstift und seine Verlängerung, beispielsweise in Form eines Hakens derartig weit in den Körper des Köders hinein, dass eine fischähnliche Führung des Köders unter Wasser aufgrund der dadurch eintretenden Versteifung des Köderkörpers praktisch nur sehr schwer möglich ist.

Zudem ist der Haken meist direkt im JIG-Körper integriert, wodurch der Angler in der Auswahl seines bevorzugten Hakens eingeschränkt ist bzw. bisweilen gezwungen ist, einen zusätzlichen Haken anzubringen.

Die meisten JIG-Kopfteile bestehen aus Blei, das sich aufgrund seiner physikalischen Eigenschaften, wie hohe Dichte, niedriger Schmelzpunkt, Weichheit gut für derartiges Anglerzubehör eignet.
Die JIG-Kopfteile sind klein und handlich, bei ausreichendem Gewicht (2 - 800 g) und leicht herstellbar. Allerdings ist Blei als umweltgiftig einzustufen.

Es wurde schon vorgeschlagen JIG-Köpfe aus Buntmetall oder Edelstahl (DE 299 15 294 U), keramischen Werkstoffen (DE10 2005 016 652 A), Wismuthlegierungen (WO 92/08346 A) herzustellen oder den aus Blei bestehenden Köper, beispielsweise mit Kunststoffen zu ummanteln (EP 0 693 253 A) um eine Belastung von Gewässern durch beispielsweise verloren gegangene JIG-Köpfe zu verhindern.

Aufgabe der Erfindung war es einen JIG-Kopf bereitzustellen, der eine zerstörungsfreie Montage eines Köders erlaubt.

Gegenstand der Erfindung ist daher ein JIG-System gemäß Anspruch 1

Die Fixiervorrichtung besteht dabei vorzugsweise aus einem Fixierdorn mit Haltevorrichtungen, die den Halt des Köders am Fixierdorn verbessern. Diese Haltevorrichtungen sind beispielsweise als Widerhaken und/oder Ausbuchtungen und/oder Riffelungen ausgeführt.
Diese haltverstärkenden Elemente dienen dazu, den Köder nach dem Aufstecken auf den Fixierdorn zusätzlich gegen Verdrehen oder Ablösen zu sichern.
Der Fixierdorn ist dabei möglichst kurz ausgeführt um eine lebendfischähnliche Führung des Köders zu ermöglichen.

Die Haltelemente befinden sich dabei vorzugsweise im zweiten oder dritten Drittel des vom JIG-Kopf abgewandten Teil des Fixierdorns und zeichnen sich vorzugsweise durch ringförmige und gerade Ausbuchtungen aus.
Der Köder wird dabei nur in seinem vorderstmöglichen Bereich auf dem Fixierdorn montiert
Dadurch wird eine Lebendfischähnliche Führung des zu befestigenden Köders ermöglicht.

Die Haltevorrichtung besteht dabei aus einem klappbaren Bügel, der jeweils seitlich höhen- und tiefenversetzt beidseitig am Kopfteil des JIG-Körpers verankert ist. Der Bügel steht unter anderem dadurch unter Vorspannung, wobei die Vorspannung derart eingestellt ist, dass der gewünschte Köder mit ausreichender Kraft festgehalten wird ohne dabei beschädigt zu werden.

Der Bügel kann dabei in Form einer Schlaufe, oder annähernd elliptisch, dreieckig, viereckig oder kreisförmig, jedenfalls aber aus starrem Material ausgeführt sein. Vorzugsweise besteht der Bügel aus einem Eisenwerkstoff, beispielsweise Federstahldraht, gegebenenfalls kann die Oberfläche des Bügels auch beschichtet oder oberflächenbehandelt sein.

Anschließend wird noch der Haken am Kopföhr des JIG-Kopfes und am Köder befestigt.
Der klappbare Bügel ist für alle Arten und Formen von JIG-Köpfen anwendbar und ermöglicht eine unkomplizierte zerstörungsfrei Montage des Köders bei gleichzeitig sicherer Fixierung.
Ferner kann der Köder problemlos gewechselt werden.

Es ist dabei unerheblich aus welchem Material der Köder besteht. Der Köder kann beispielsweise aus Kunststoff oder Naturmaterialien bestehen. Insbesondere bei Kunststoffködern, beispielsweise Weichkunststoffködern kann der Köder mehrmals verwendet werden.

Ferner kann der Haken beliebig, je nach Köderlänge gewählt werden, da er erst nach der Befestigung des Köders am Köpföhr des JIG-Kopfs fixiert wird und dadurch austauschbar ist.

Vorteilhafterweise ist der JIG-Kopf aus einem Eisenwerkstoff, beispielsweise Stahl, Gusseisen oder dergleichen gefertigt. Der Vorteil der Verwendung dieser Werkstoffe liegt auch in der verhältnismäßig hohen Dichte, das heißt, es können kleine Teile mit hohem Gewicht gefertigt werden.

Der JIG-Kopf wird dabei vorteilhafterweise in einem bekannten Schmiedeverfahren, beispielsweise Freiform- oder Gesenkschmiedeverfahren, oder mittels eines Stahlguss-, Sinter- oder spanabhebenden Verfahrens gefertigt.

Ferner wird durch die Verwendung dieser Werkstoffe die Umweltbelastung gegenüber der Verwendung von Blei-JIG-Köpfen praktisch auf Null reduziert, eine Umhüllung oder Beschichtung durch beispielsweise Kunststoff zur Vermeidung einer Umweltbelastung ist nicht nötig.

Das erfindungsgemäße JIG-Kopfsystem ermöglicht eine lebendfischähnliche Führung des Köders, eine einfache und zerstörungsfreie Halterung des Köders ohne zusätzliche Klebeverbindungen und ohne Verletzungsgefahr für den Benutzer, da der Haken erst nach der Befestigung des Köders montiert wird.

In Fig. 1 ist ein dem Stand der Technik entsprechender JIG-Kopf dargestellt.

Darin bedeuten 1 das Kopfteil, 2 den Fixierdorn, 3 den Haken und 4 den Köder. Die Form des Kopfteils ist beispielhaft dargestellt, jede andere bekannte Form des Kopfteils ist möglich.

In Fig. 2 ist eine Ausführungsform des erfindungsgemäßen JIG-Kopfs dargestellt.

Fig. 2 a zeigt dabei den JIG Kopf vor Anbringen des Köders, Fig. 2b zeigt den JIG-Kopf nach Anbringen des Köders.

Darin bedeuten 1 das Kopfteil, 2 den Fixierdorn, 4 den Köder, 5 den klappbaren Bügel, 6 die Bohrungen in denen der Bügel seitlich versetzt auf beiden Seiten des JIG-Kopfes drehbar fixiert ist, 7 die Schnur zur Angel.
Der Köder 4 wird dabei in Pfeilrichtung p auf den Fixierdorn aufgesteckt, wobei dann der Bügel in Richtung r umgeklappt wird um den Köder am JIG-Kopf sicher zu befestigen.

Fig. 3 zeigt eine Ausführungsform des erfindungsgemäßen JIG-Kopfs mit montiertem Haken 3.

In Fig. 4 ist ein erfindungsgemäßer JIG-Kopf mit beispielhaft seitlich versetzten Bohrungen zur Befestigung des Bügels dargestellt.
Darin bedeuten 1 den JIG-Kopf und 6 bzw. 6a die seitlich versetzten Bohrungen und 7 die Schnur zur Angel.
Durch die seitliche Versetzung der Bohrungen wird die Vorspannung des Bügels mitbestimmt.

## Patentansprüche

1. JIG-System bestehend aus einem JIG-Kopf (1), einer Fixiervorrichtung (2) und einer Haltevorrichtung (5), **dadurch gekennzeichnet, dass** der Köder (4) an der Fixiervorrichtung (2) durch einen unter Vorspannung stehenden Klappbügel (5) fixiert wird und der Klappbügel (5) auf beiden Seiten des JIG-Kopfs (1) seitlich in einer Ebene versetzt drehbar montiert ist.

2. JIG-System nach Anspruch 1, **dadurch gekennzeichnet, dass** die Fixiervorrichtung (2) ein Fixierdorn ist.

3. JIG-System nach Anspruch 2, **dadurch gekennzeichnet, dass** die Länge des Fixierdorns (2) so angelegt ist, dass eine lebendfischähnliche Führung des Köders (4) ermöglicht wird.

4. JIG-System nach einem der Ansprüche 2 bis 3, **dadurch gekennzeichnet, dass** der Fixierdorn (2) Haltevorrichtungen (5) in seinem zweiten und/oder dritten vom JIG-Kopf (1) abgewandten Drittel aufweist.

5. JIG-System nach einem der Ansprüche 2 bis 4, **dadurch gekennzeichnet, dass** die Haltevorrichtungen (5) am Fixierdorn (2) als Widerhaken und/oder Ausbuchtungen, Bohrungen und/oder Riffelungen ausgeführt sind.

6. JIG-System nach einem der Ansprüche 1 bis 5, **dadurch gekennzeichnet, dass** der Bügel (5) aus starrem Material als Schlaufe, annähernd elliptisch, dreieckig, viereckig oder kreisförmig ausgeführt ist.

7. JIG-System nach einem der Ansprüche 1 bis 6, **dadurch gekennzeichnet, dass** der Bügel (5) aus Metalldraht, vorzugsweise Federstahldraht ausgeführt ist.

8. JIG-System nach einem der Ansprüche 1 bis 7, **dadurch gekennzeichnet, dass** der Bügel (5) oberflächenbehandelt oder oberflächenbeschichtet ist.

9. JIG System nach einem der Ansprüche 1 bis 8, **dadurch gekennzeichnet, dass** ein Haken (3) am Köpföhr des JIG-Kopfs (1) austauschbar montiert ist.

10. JIG-System nach einem der Ansprüche 1 bis 9, **dadurch gekennzeichnet, dass** der JIG-Kopf (1) aus einem Eisenwerkstoff gefertigt ist.

## Claims

1. Jig system comprising a jig head (1), a fixing device (2) and a holding device (5), **characterized in that** the lure (4) is fixed on the fixing device (2) by means of a hinged clip (5) which is under prestress and the hinged clip (5) is rotatably mounted on both sides of the jig head (1) so as to be offset laterally in a plane.

2. Jig system according to Claim 1, **characterized in that** the fixing device (2) is a fixing spike.

3. Jig system according to Claim 2, **characterized in that** the length of the fixing spike (2) is designed such that a live fish-like guidance of the lure (4) is made possible.

4. Jig system according to either of Claims 2 and 3, **characterized in that** the fixing spike (2) has holding devices (5) in its second third and/or third third facing away from the jig head (1).

5. Jig system according to one of Claims 2 to 4, **characterized in that** the holding devices (5) on the fixing spike (2) are embodied as barbs and/or protrusions, bores and/or fluting.

6. Jig system according to one of Claims 1 to 5, **characterized in that** the clip (5) is constructed from rigid material as a loop, approximately in the form of an ellipse, triangle, quadrangle or circle.

7. Jig system according to one of Claims 1 to 6, **characterized in that** the clip (5) is constructed from metal wire, preferably spring steel wire.

8. Jig system according to one of Claims 1 to 7, **characterized in that** the clip (5) is surface-treated or surface-coated.

9. Jig system according to one of Claims 1 to 8, **characterized in that** a hook (3) is exchangeably mounted on the head lug of the jig head (1).

10. Jig system according to one of Claims 1 to 9, **characterized in that** the jig head (1) is manufactured from an iron material.

## Revendications

1. Système JIG constitué d'une tête JIG (1), d'un dispositif de fixation (2) et d'un dispositif de retenue (5), **caractérisé en ce que** l'appât (4) est fixé au niveau du dispositif de fixation (2) par un arceau rabattable (5) sous précontrainte, et **en ce que** l'arceau rabattable (5) est monté de manière à pouvoir tourner de manière décalée latéralement dans un plan sur les deux côtés de la tête JIG (1).

2. Système JIG selon la revendication 1, **caractérisé en ce que** le dispositif de fixation (2) est un mandrin de fixation.

3. Système JIG selon la revendication 2, **caractérisé en ce que** la longueur du mandrin de fixation (2) est établie de telle manière qu'il est possible de guider l'appât (4) de manière à ressembler à un poisson vivant.

4. Système JIG selon l'une quelconque des revendications 2 à 3, **caractérisé en ce que** le mandrin de fixation (2) présente des dispositifs de retenue (5) dans son deuxième et/ou troisième tiers opposé à la tête JIG (1).

5. Système JIG selon l'une quelconque des revendications 2 à 4, **caractérisé en ce que** les dispositifs de retenue (5) sont réalisés au niveau du mandrin de fixation (2) sous la forme de barbes et/ou d'indentations, d'alésages et/ou de cannelures.

6. Système JIG selon l'une quelconque des revendications 1 à 5, **caractérisé en ce que** l'arceau (5) est réalisé à partir d'un matériau rigide sous la forme d'une boucle, de manière à présenter de manière approximative une forme elliptique, triangulaire, quadrangulaire ou circulaire.

7. Système JIG selon l'une quelconque des revendications 1 à 6, **caractérisé en ce que** l'arceau (5) est réalisé à partir d'un fil métallique, de préférence à partir d'un fil d'acier à ressort.

8. Système JIG selon l'une quelconque des revendications 1 à 7, **caractérisé en ce que** l'arceau (5) est traité en surface ou enduit en surface.

9. Système JIG selon l'une quelconque des revendications 1 à 8, **caractérisé en ce qu'**un crochet (3) est monté de manière échangeable au niveau de l'oreillette de la tête JIG (1).

10. Système JIG selon l'une quelconque des revendications 1 à 9, **caractérisé en ce que** la tête JIG (1) est fabriquée à partir d'un matériau de fer.
